(19) Europäisches Patentamt
European Patent Office
Office européen des brevets

(11) **EP 2 375 297 A1**

(12) **EUROPEAN PATENT APPLICATION**
published in accordance with Art. 153(4) EPC

(43) Date of publication:
**12.10.2011 Bulletin 2011/41**

(51) Int Cl.:
***G05B 19/418*** (2006.01)      ***G06Q 50/00*** (2006.01)

(21) Application number: **08878543.1**

(22) Date of filing: **05.12.2008**

(86) International application number:
**PCT/JP2008/003625**

(87) International publication number:
**WO 2010/064281 (10.06.2010 Gazette 2010/23)**

(84) Designated Contracting States:
**AT BE BG CH CY CZ DE DK EE ES FI FR GB GR HR HU IE IS IT LI LT LU LV MC MT NL NO PL PT RO SE SI SK TR**

(71) Applicant: **Hitachi, Ltd.**
**Chiyoda-ku**
**Tokyo 100-8280 (JP)**

(72) Inventors:
• **ISHIBASHI, Hisaya**
**Yokohama-shi**
**Kanagawa 244-0817 (JP)**

• **NONAKA, Youichi**
**Yokohama-shi**
**Kanagawa 244-0817 (JP)**
• **NAGAHARA, Satoshi**
**Yokohama-shi**
**Kanagawa 244-0817 (JP)**
• **NAKANO, Takahiro**
**Yokohama-shi**
**Kanagawa 244-0817 (JP)**

(74) Representative: **Calderbank, Thomas Roger et al**
**Mewburn Ellis LLP**
**33 Gutter Lane**
**London**
**EC2V 8AS (GB)**

(54) **MANUFACTURING PLAN DRAWING-UP SYSTEM AND METHOD**

(57) Planning items necessary for the evaluation of a manufacturing capability in a production line are categorized from process routes of operation achievement information for every ordered product, so that operation time per process unit is calculated. Thereupon the similarity of the process routes of the categorized planning items to those of an ordered product is evaluated, the planning items are allocated to the ordered product, and different product operation time is set up for every specification, so that a manufacturing capability of a production line is precisely evaluated to make a production plan.

FIG. 3

START

S31 CALCULATION OF OPERATION TIME AND EXTRACTION OF ALL PROCESS ROUTES FROM OPERATION ACHIEVEMENT INFORMATION

S32 ADDITION OF PROCESS ROUTE AND CORRECTION OF OPERATION TIME

S33 DETERMINATION OF PLANNING ITEMS

S34 EVALUATE SIMILARITY BETWEEN PROCESS ROUTE OF PLANNING ITEMS AND PROCESS ROUTE OF ORDER AND ALLOCATE PLANNING ITEMS TO ORDER

S35 EVALUATION OF MANUFACTURING CAPABILITY OF PRODUCTION LINE

END

EP 2 375 297 A1

**Description**

FIELD OF THE INVENTION

The present invention relates to a production planning system and a production planning method for individually ordered products, and more particularly to a production planning system and a production planning method for drawing up a highly accurate production plan in a short time.

BACKGROUND OF THE INVENTION

For individually ordered products such as industrial machines, motors, and elevators, it is important to construct a production line and build production management technology which enable ordered products to be manufactured in time for a delivery date requested by customers. Up to now, in terms of production line construction and production management technology, they have made production plans which can meet delivery dates requested by customers by making use of production line simulators and evaluating manufacturing capabilities of individual production lines. Patent document 1, for example, discloses that, for a semiconductor product, a starting plan and production instructions are generated by evaluating the manufacturing capability of a production line using a production line simulator.

To accurately evaluate the manufacturing capability of a production line using a production line simulator, it is necessary to secure accuracy of the operation time for each process for each product to be used as a parameter for a production line simulator. To realize this, there is a method in which parameters such as operation time to be used by a production line simulator are automatically set. According to patent document 2, achievement data is acquired from a production line via an achievement collection system, and operation times are automatically set as parameters to be used next time by a production line simulator. In this way, the accuracy of evaluation of the manufacturing capability of a production line made using a production line simulator is improved.

Furthermore, according to patent document 3, in order to improve the accuracy of a production line simulator, operation time, for example, of an assembly process involving human factors, is set by taking into account an operator's maturity and fatigue level.

    Patent document 1: Japanese patent laid-open No. 2003-288476
    Patent document 2: Japanese patent laid-open No. 2007-201309
    Patent document 3: Japanese patent laid-open No. 2007-188133

SUMMARY OF THE INVENTION

PROBLEM TO BE SOLVED BY THE INVENTION

Individually ordered products such as industrial machines, motors, elevators, and escalators, however, involve different specifications depending on orders received from customers, so that there are not many cases in which same components are repeatedly manufactured. Even same-named products use different optional components to be manufactured through different operations requiring different operation times and involving different processes. Therefore, in order to evaluate the manufacturing capability of a production line using a production line simulator, it is necessary to set operation time for each order received from a customer and each process. In reality, operation time setting has not been standardized, and it is difficult to set operation time for each order and each process because doing so takes a great amount of time. Furthermore, in the case of a new product, manufacturing involves a new operation, so that operation time cannot be accurately set. This poses a problem that the manufacturing capability of a production line cannot be accurately evaluated using a production line simulator.

According to the present invention, to address the above problem, operation times are set for products of different specifications based on operation time for each process. The present invention provides a production planning system and a production planning method for, using the above approach, accurately evaluating the manufacturing capability of a production line and drawing up a production plan.

MEANS FOR SOLVING PROBLEM

The above object can be achieved by a production planning system which classifies planning items necessary for evaluating the manufacturing capability of a production line based on process routes known from operation achievement information for each order received, and calculates operation time for each process. The production planning system then evaluates similarity between the process routes of the classified planning items and the process routes for the received order, allocates planning items to the order and, by using the operation time calculated for each process, sets operation time for each product of a different specification, so that the production planning system can accurately evaluate the manufacturing capability of a production line and make a production plan.

Also, the object can be achieved by a production planning system including: an extraction/calculation section for, based on operation achievement information, extracting a process route of a production line and calculating an operation time for the process route; an addition/calculation section for, based on a difference between achieved manufacturing capability of the production line and evaluated manufacturing capability of the production line, adding the process route to a process route list and calculating a corrected operation time; a selection section for selecting a planning item from the process route list; an allocation section for evaluating similarity between the process route of the planning item and a process route for a received order and allocating the planning item to the received order; and a production planning section for evaluating the manufacturing capability of the production line based on the planning item and creating a production plan. Furthermore, the object can be achieved by a production planning method including the steps of: based on operation achievement information, extracting a process route of a production line and calculating an operation time for the process route; based on a difference between achieved manufacturing capability of the production line and evaluated manufacturing capability of the production line, adding the process route to a process route list and calculating a corrected operation time; selecting a planning item from the process route list; evaluating similarity between the process route of the planning item and a process route for a received order and allocating the planning item to the received order; and evaluating the manufacturing capability of the production line based on the planning item and creating a production plan.

EFFECT OF THE INVENTION

According to the present invention, the manufacturing capability of a production line for an individually ordered product can be accurately evaluated. This makes it possible to make, accurately and in a short period of time, a production plan which enables a delivery date to be observed.

BRIEF DESCRIPTION OF THE DRAWINGS

FIG. 1 is a hardware block diagram of a production planning system;
FIG. 2 is a block diagram for explaining information held in an external storage device;
FIG. 3 is a macroscopic operation flowchart for a production planning system;
FIG. 4 is a flowchart for extracting all processes from operation achievement information and creating a process route;
FIG. 5 is a diagram for explaining operation achievement information;
FIG. 6 is a diagram for explaining process route information;
FIG. 7 is a diagram for explaining a table depicting process routes using a table;
FIG. 8 is a diagram for explaining a screen showing process routes in a graph format;
FIG. 9 is a flowchart for category classification based on process routes and operation times;
FIG. 10 is a flowchart of processing for examining the accuracy of evaluation of the manufacturing capability of a production line;
FIG. 11 is a diagram for explaining planning item information;
FIG. 12 is a diagram for explaining order information;
FIG. 13 is a diagram for explaining operation process information;
FIG. 14 is a flowchart of processing for order information allocation;
FIG. 15 is a diagram for explaining planning item allocation information;
FIG. 16 is a flowchart of processing for drawing up a production plan;
FIG. 17 shows a screen displaying a result of evaluating the manufacturing capability of a production line;
FIG. 18 shows a screen displaying a result of evaluating the manufacturing capability of a production line;
FIG. 19 shows a screen displaying a result of evaluating the manufacturing capability of a production line;
FIG. 20 is a diagram for explaining a result of evaluating the throughput of a production line; and
FIG. 21 is a diagram for explaining a result of evaluating the work in process of a production line.

DESCRIPTION OF THE PREFERRED EMBODIMENT

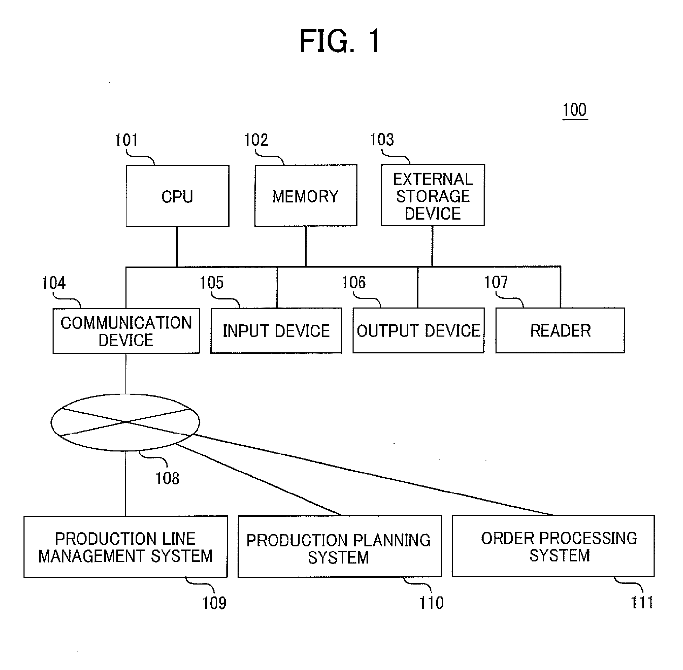

Modes of the present invention will be described below with reference to drawings based on an embodiment. In the following, identical parts will be allocated identical reference numerals and their description will not be repeated. A production planning system 100 is comprised of a computer system including, as shown in FIG. 1, a CPU 101, a memory 102, an external storage device 103 comprised of a hard disk drive, a reader 107 which reads data from a portable storage medium such as a CD-ROM or a DVD-ROM, an input device 105 such as a keyboard and a mouse, an output device 106 such as a CRT or an LCD, a communication device 104 for performing communication via a network 108 which may be, for example, the Internet, and a bus interconnecting the above devices. The production planning system 100 can also be built on a network system provided with plural computer systems like the one described above.

External systems such as a production line management system 109, a production planning system 110, and an order processing system 111 are connected to the production planning system 100 via a network 108. There are cases in which a single production line management system 109 manages operation achievement information for all production lines and also cases in which as many production line management systems 109 as the number of production lines are installed. The production planning system 110 manages production plan information. The order processing system 111 manages order information such as product specifications, customer information and a delivery date for each order received from a customer.

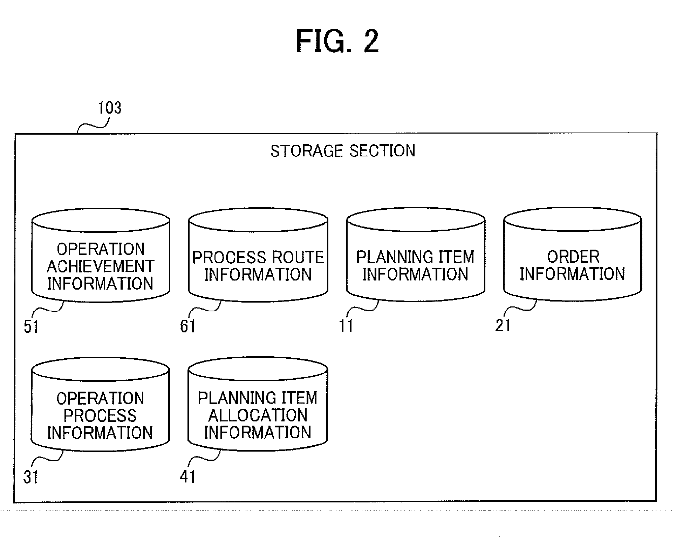

The storage section 103 of the production planning system 100 holds, as shown in FIG. 2, operation achievement information 51, process route information 61 and planning item information 11 read from the production line management system 109 and registered and order information 21 about orders from customers, operation process information 31 and planning item allocation information 41 registered at the order processing system 111.

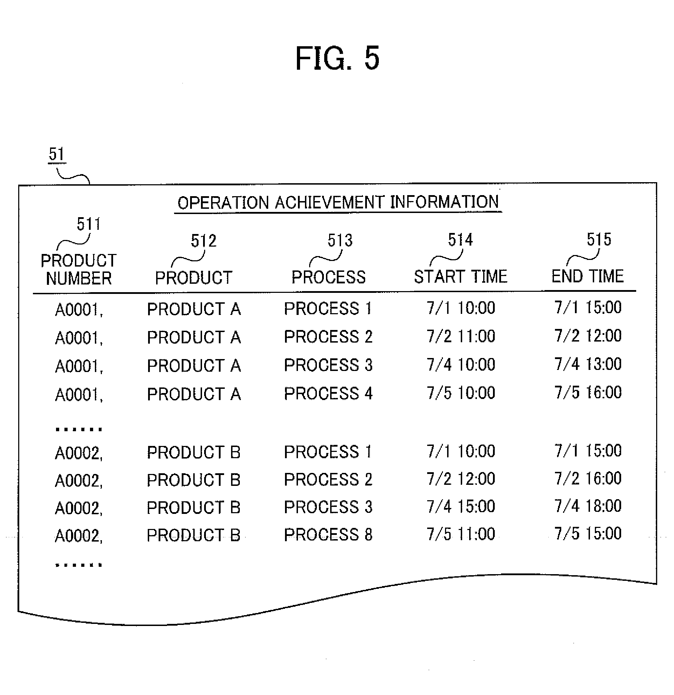

The operation achievement information 51, process route information 61, planning item information 11, order information 21, operation process information 31, and planning item allocation information 41 will be described later with reference to FIGS. 5, 6, 11, 12, 13, and 15, respectively.

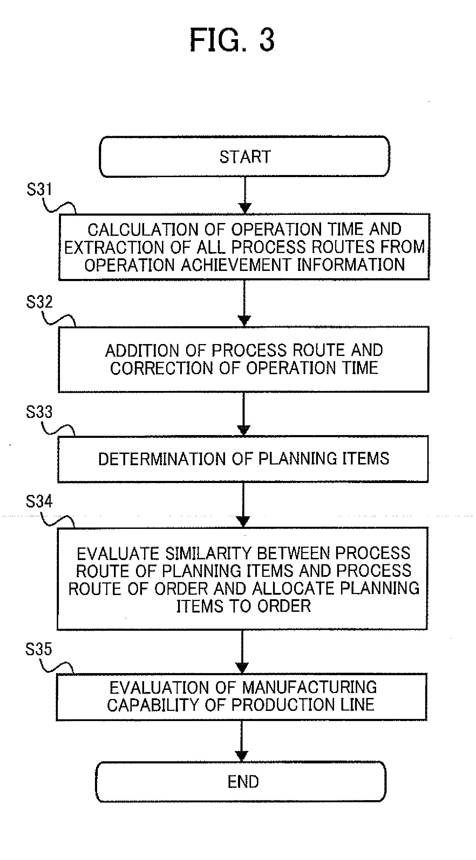

Next, the processing flow of a processing program executed by the CPU 101 of the production planning system 100 will be described with reference to FIG. 3. Referring to FIG. 3, the production planning system 100 first collects operation start and operation completion information (operation achievement information) by process and order, calculates operation times, and extracts all process routes from operation achievement information for each product (S31). Next, the production planning system 100 adds process routes to a process route list based on the difference between the actual manufacturing capability and evaluated manufacturing capability of the production line and corrects the operation times (S32). Based on the process route list, the production planning system 100 sets and determines planning items (S33), wherein each planning item represents a process route pattern to make up a production plan.

Next, the production planning system 100 calculates similarity between the process routes of the planning items and the process route of the order and allocates the order information to the planning item showing the highest similarity (S34). Finally, the production planning system 100 evaluates the manufacturing capability of the production line and creates a production plan (S35).

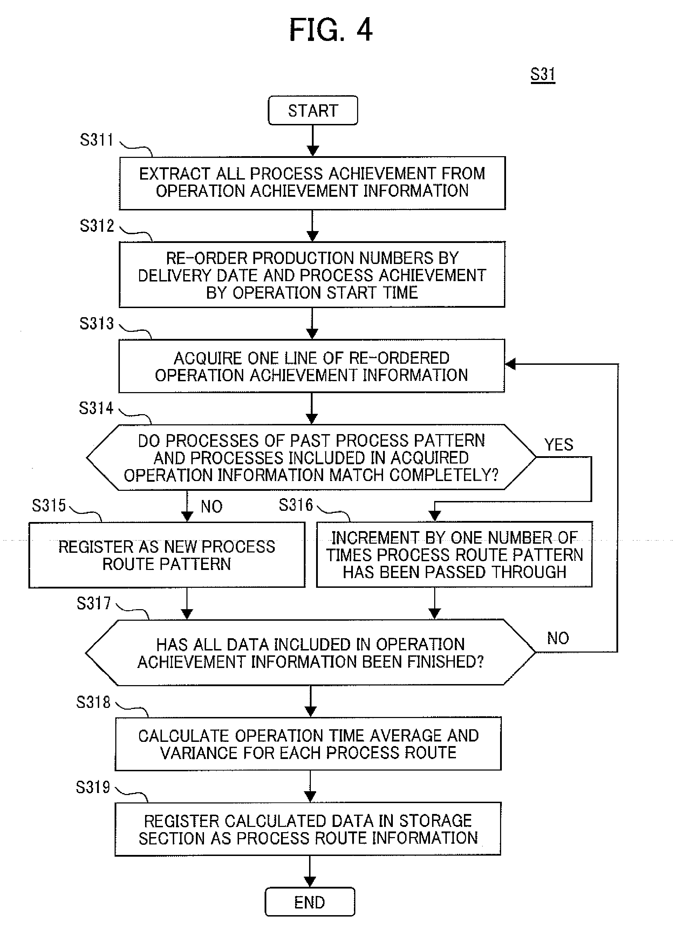

In the following, details of the processing shown in FIG. 3 will be described in order. FIG. 4 shows details of step 31 in which the production planning system 100 collects operation start and operation completion information by process and order, calculates operation times, and extracts all process routes from operation achievement information for each product.

Referring to FIG. 4, the production planning system 100 first extracts all process achievement information from the operation achievement information (operation achievement data) (S311).

Next, the production planning system 100 re-orders product numbers by delivery date and the process achievement information by operation start time (S312). Next, the production planning system 100 acquires one line of re-ordered operation achievement data (S313). Next, the production planning system 100 examines the process routes indicated by the acquired data and registers them as process route patterns. In doing this, the production planning system 100 compares past process route patterns and the process routes included in the acquired data (S314). To be concrete, when all processes match, the process route patterns are determined to be the same. When there are one or more extra processes or when one or more processes are lacking, the process route patterns are regarded not matching and the acquired processes are regarded as making up a new process route pattern. A process route not found in the past process routes is registered as a new process route pattern by the production planning system 100 (S315). When an identical process route already exists, the production planning system 100 increments the number of process route patterns (S316). The production planning system 100 repeats the above processing until all data included in the operation achievement information has been finished (S317). When all data has been finished, the production planning system 100 calculates operation time averages and variances by process route (S318).

Where n is the total number of process routes i and $S_{tj}$ is the operation time for product number j, average $\mu_i$ of operation times $S_{tj}$ of process routes i is given by the following equation 1. Also, variance $\sigma_i$ of operation times $S_{tj}$ of process routes i is given by the following equation 2.

$$\mu_i = \frac{1}{n}\sum_{j=1}^{n} St_j \qquad --- \quad (1)$$

$$\sigma_i = \sqrt{\frac{1}{n}\sum_{j=1}^{n}(St_j - \mu_i)^2} \qquad --- \quad (2)$$

Finally, the production planning system 100 registers the calculated data as process route information in the storage section 103 (S319).

The operation achievement information will be described with reference to FIG. 5. Referring to FIG. 5, the operation achievement information 51 includes a product number field 511 where product numbers are registered as final product identification numbers, a product field 512 where product names of final products are registered, a process field 513 where production processes are registered, a start time field 514 where the operation start times of production processes are registered, and an end time field 515 where the operation end times of the production processes are entered.

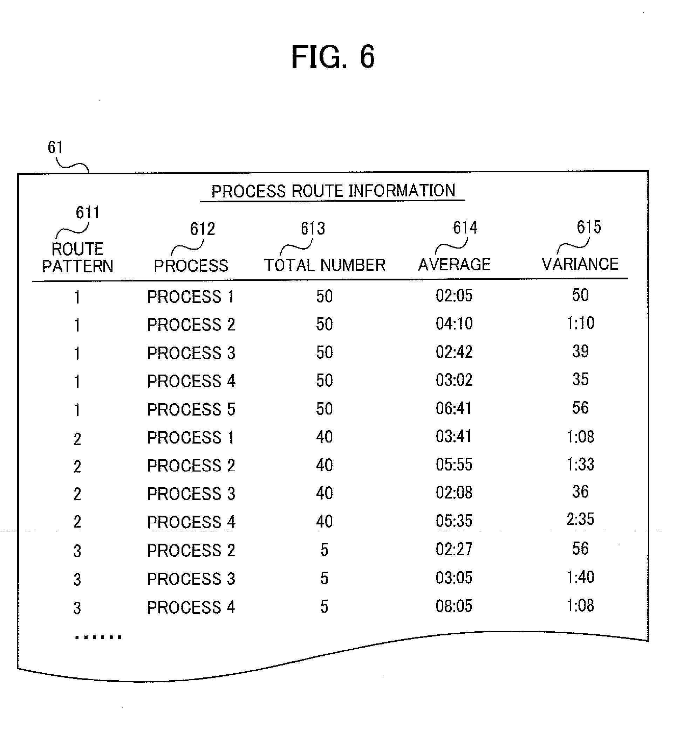

The process route information will be described with reference to FIG. 6. Referring to FIG. 6, the process route information 61 includes a route pattern field 611 where route patterns are registered as process route information identification numbers, a process field 612 where the names of processes passed through in each route pattern are registered, a total number field 613 where the total numbers of times process routes have been passed through are registered, an average field 614 where operation time averages are registered, and a variance field 615 where operation time variances are registered.

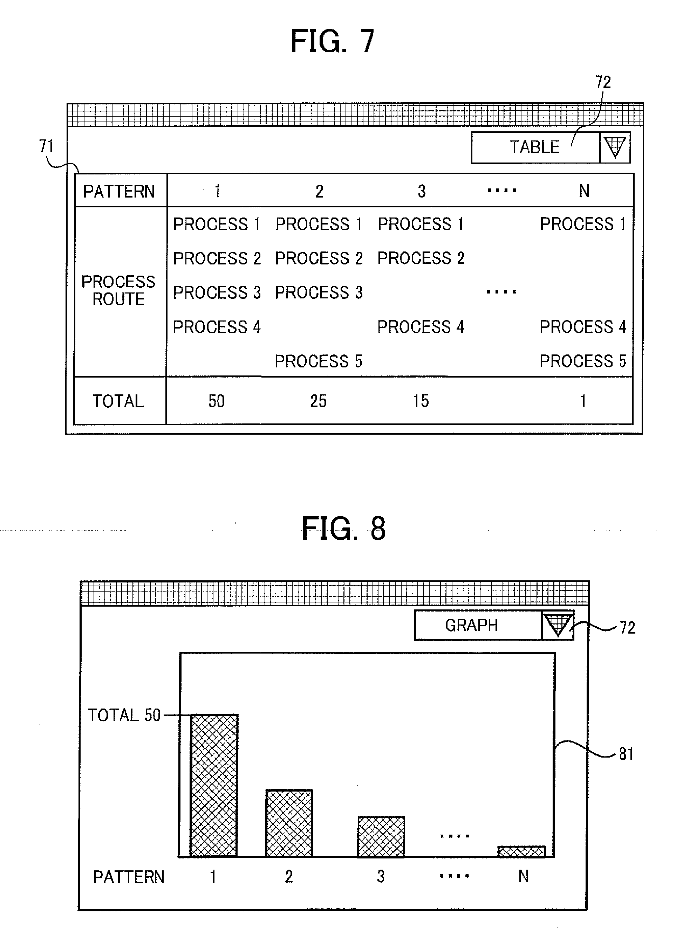

The process route patterns extracted and classified as described with reference to FIG. 4 will be described below with reference to FIGS. 7 and 8. FIGS. 7 and 8 each show a display of the output device 106. Referring to FIG. 7, the production planning system 100 classifies process route patterns and displays the results in the format of a process pattern classification table 71. In the process pattern classification table 71, process route patterns are listed along the horizontal direction and processes passed through by products are listed along the vertical direction. In the process extraction processing described in FIG. 4, all process routes are extracted, and the results are displayed as process route pattern types along the horizontal direction of the process pattern classification table 71. The processes included in each of the process route patterns are listed along the vertical direction. In the bottom row of the table, the total number of times each process route pattern has been passed through is displayed. In FIG. 7, a pull-down menu 72 is shown in an upper right part of the process pattern classification table 71. In the present example, TABLE is selected in the pull-down menu.

FIG. 8 shows a display which appears when GRAPH is selected by the pull-down menu shown in FIG. 7. Referring to FIG. 8, when GRAPH is selected by the pull-down menu 72, the production planning system 100 shows a process pattern frequency graph 81. In the process pattern frequency graph 81, the horizontal axis represents patterns and the vertical axis represents the total number of times each pattern has been passed through. In the process pattern frequency graph 81, the process patterns are ordered according to the frequency of being passed through. The process pattern frequency graph 81 is a Pareto chart showing process patterns having large effects on a production plan. Process patterns accounting for about 80% of all the process patterns are selected as planning items.

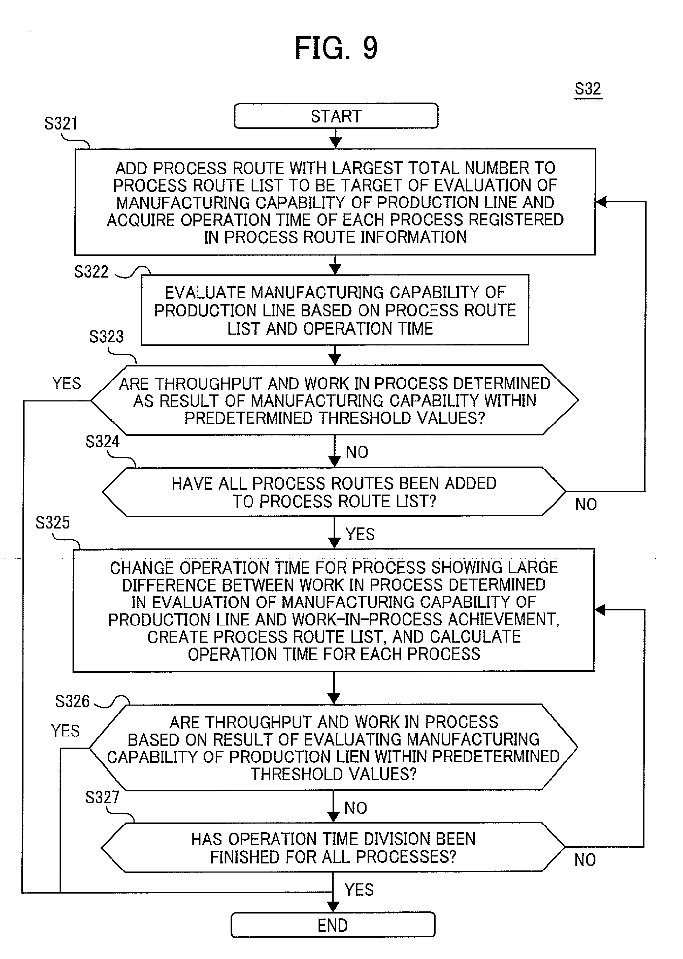

Next, addition to the process route list and operation time correction processing (S32) will be described in detail with reference to FIG. 9. Referring to FIG. 9, the production planning system 100 first adds the process route pattern that has been passed through the most times among all the process route patterns to the process route list to be the target of evaluating the manufacturing capability of the production line and acquires the operation time of each process registered in the process route information (S321).

Next, based on the target process route list and operation time, the production planning system 100 evaluates the manufacturing capability of the production line (S322).

Furthermore, based on the result of evaluation of the manufacturing capability of the production line, the production planning system 100 determines whether the throughput and work in process are within threshold values (S323). Concerning the throughput and work in process, the production planning system 100 calculates accuracies Th Ratio and Wip_Ratio using the following equations 3 and 4. When the calculated values are within the threshold values (S323: YES), the production planning system 100 ends evaluation of the manufacturing capability of the production line. In the above, Th represents Throughput and Wip represents Work In Process.

$$\text{Th\_Ratio} = \left| \frac{\text{Actual\_Th} - \text{Sim\_Th}}{\text{Actual\_Th}} \right| \qquad --- \quad (3)$$

$$\text{Wip\_Ratio} = \left| \frac{\text{Actual\_Wip} - \text{Sim\_Wip}}{\text{Actual\_Wip}} \right| \qquad --- \quad (4)$$

In the above equations, Actual_Th represents throughput achievement in a certain period, Actual_Wip represents work-in-process achievement, Sim_Th represents throughput determined in evaluation of the manufacturing capability of the production line, and Sim_Wip represents work in process determined. Note that Sim stands for simulation.

When the calculated values are not within the threshold values (S323: NO), the production planning system 100 acquires data on the process route that has been passed through the second most times from the process route information, adds a new process route line to the process route list that has been in use for manufacturing capability evaluation, and evaluates the manufacturing capability of the production line. This process is repeated until all process routes have been added to the process route list (S324).

After all process routes are added to the process route list (S324: YES), the production planning system 100 changes the operation time for each process showing a large difference between the work in process determined in evaluation of the manufacturing capability of the production line and the work-in-process achievement, creates a target process route list, and calculates the operation time for each process (S325).

Based on the new process route list, the production planning system 100 evaluates the manufacturing capability of the production line and, based on the results of evaluation of the manufacturing capability of the production line, determines whether the throughput and work in process are within predetermined threshold values (S326).

When the throughput and work in process are within the threshold values (S326: YES), the production planning system 100 ends the processing. When they are not within the threshold values (S326: NO), the production planning system 100 adds the next process route as a target process, then repeats the above processing until the operation times of all processes have been added to the division (S327). When the operation times of all processes have been added to the division (S327: YES), the production planning system 100 ends the processing.

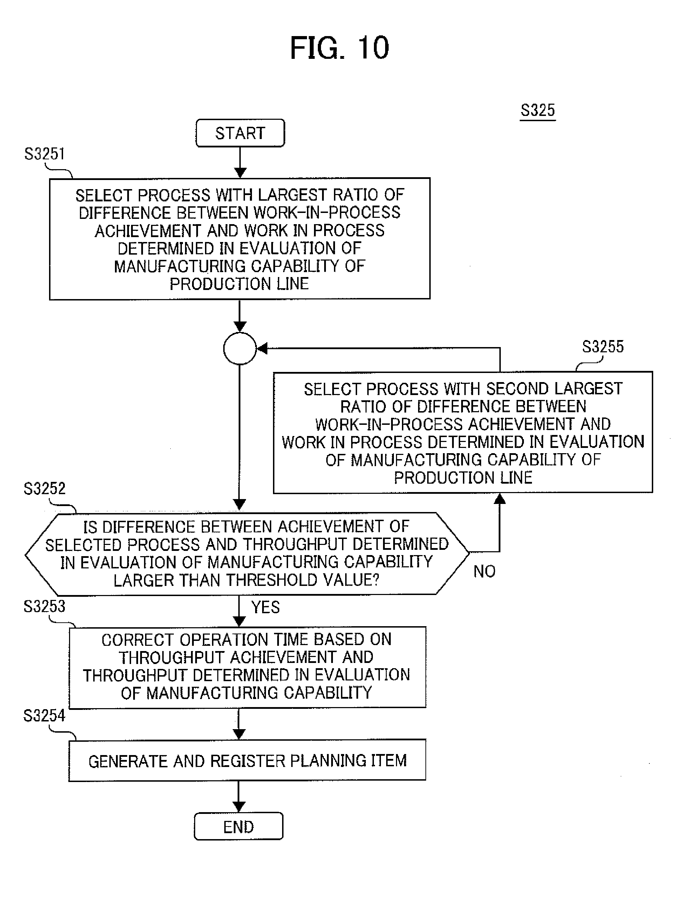

Details of the processing performed in step 325 will be described with reference to FIG. 10. Referring to FIG. 10, the production planning system 100 first compares the work in process achievement of each process with the work in process determined in evaluation of the manufacturing capability of the production line and selects the process with the largest difference ratio (S3251). To be concrete, the process whose Delta_Wipi value calculated using the following equation 5 is the largest is selected.

$$Delta\_Wip_i = \left| \frac{Actual\_Wip_i - Sim\_Wip_i}{Actual\_Wip_i} \right|$$

In the above equation, Actual_Wipi represents the work-in-process achievement in a certain period of process i and Sim_Wipi represents the work in process of process i determined as a result of evaluating the manufacturing capability of the production line.

Next, the production planning system 100 compares the difference between the achievement of the selected process and the throughput determined in manufacturing capability evaluation with a threshold value (S3252). When the difference is larger than the threshold value (YES), the production planning system 100 corrects the operation time (S3253). To be concrete, the operation time is corrected to St_Newi calculated using the following equation 6 where Sti represents the operation time of process i, Actual_Thi represents the throughput achievement in a certain period of process i, and Sim_Thi represents the throughput determined in evaluation of the manufacturing capability of the production line.

$$St\_New_i = \frac{Sim\_Thi}{Actual\_Thi} \cdot St_i \qquad --- (6)$$

The production planning system 100 corrects the operation time in the planning item information (S3254) and ends the processing.

When, in step 3252, the difference is smaller than the threshold value (NO), the production planning system 100 again compares the work in process achievement of each process and the work in process determined as a result of evaluating the manufacturing capability of the production line, selects the process with the second largest difference (S3255), and repeats the processing.

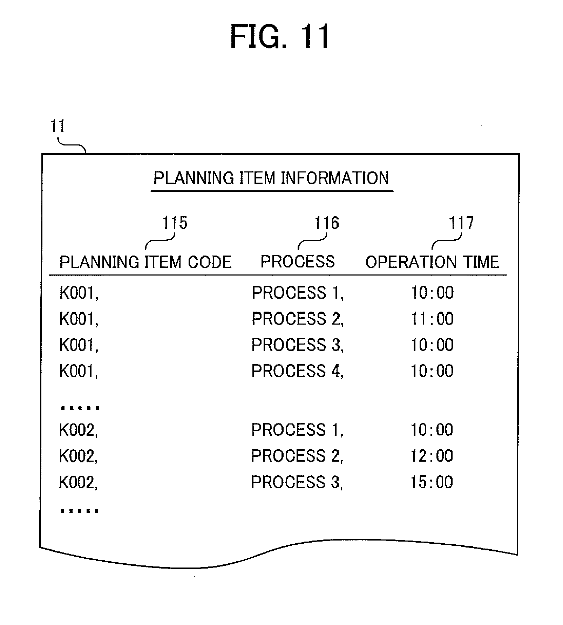

Next, the processing for determining classified categories as planning items (FIG. 3: S33) will be described with reference to FIG. 11. Referring to FIG. 11, the planning item information 11 includes a planning item code field 115 where planning item codes representing identification numbers for planning item information are registered, a process field 116 where the names of processes passed through by planning item codes are registered, and an operation time field 117 where the operation times during which the planning item codes respectively operate in the corresponding processes are registered.

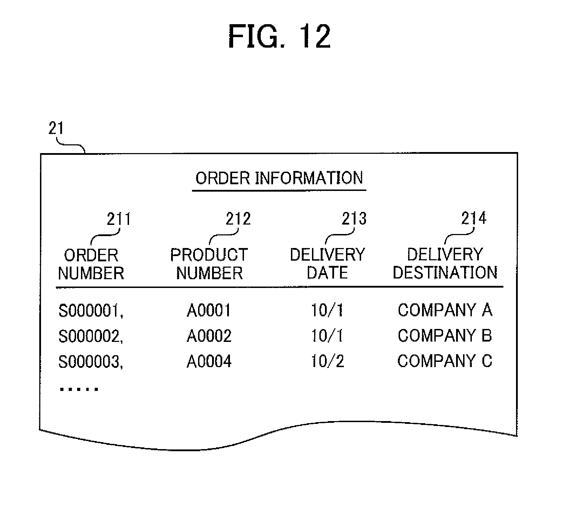

The processing for allocating order information to a planning item (FIG. 3: step 34) will be described with reference to FIGS. 12 to 14.

First, referring to FIG. 12, the order information 21 includes an order number field 211 where order numbers which are identification numbers allocated to orders when received from delivery destinations, i.e. customers, are registered, a product number field 212 where product numbers of final products are registered, a delivery date field 213 where delivery dates for products to be shipped to delivery destinations are registered, and a delivery destination field 214 where product shipment destinations are registered.

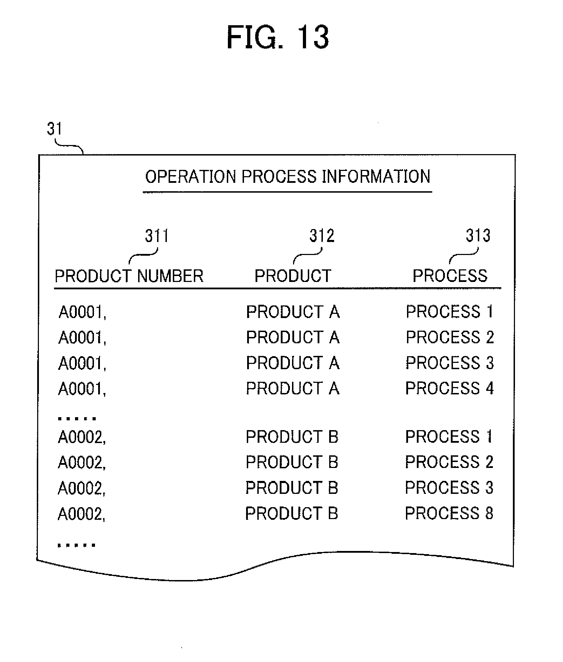

Referring to FIG. 13, the operation process information 31 includes a product number field 311 where product numbers used as final product identification numbers are registered, a product field 312 where the names of final products are registered, and a process field 313 where manufacturing processes are registered.

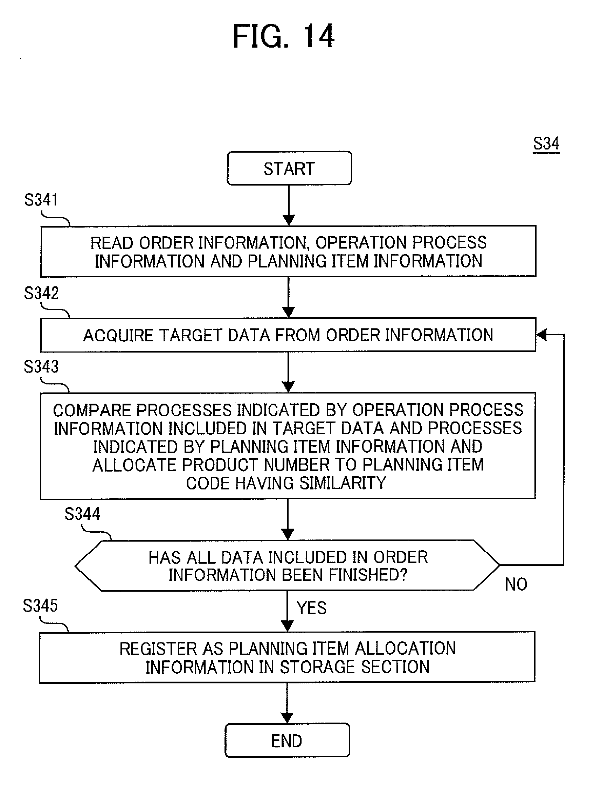

With reference to FIG. 14, the processing for order information allocation (S34) will be described in detail. Referring to FIG. 14, the production planning system 100 first reads the order information 21, operation process information 31, and planning item information 11 (S341). Next, the production planning system 100 acquires a line of target data from order information (S342). The production planning system 100 compares the processes indicated by the operation process information included in the target order information with the processes indicated by the planning item information and allocates a product number to a planning item code showing similarity (S343). To be concrete, a planning item code whose similarity P calculated using the following equation 7 is small is regarded as a similar planning item code.

$$P_i = \left| \frac{n - m_i}{n} \right|$$

--- (7)

In the above equation 7, i represents a planning item code, n represents the umber of processes indicated by the target order data, and mi represents the number of matches between planning item processes and processes indicated by the order information.

The production planning system 100 determines whether all data included in the order information has been finished (S344) and, if not yet, repeats the above processing until all data has been finished (S344: YES). Finally, the production planning system 100 registers the planning item code and product number as the planning item allocation information 41 in the storage section 103 (S345) and ends the processing.

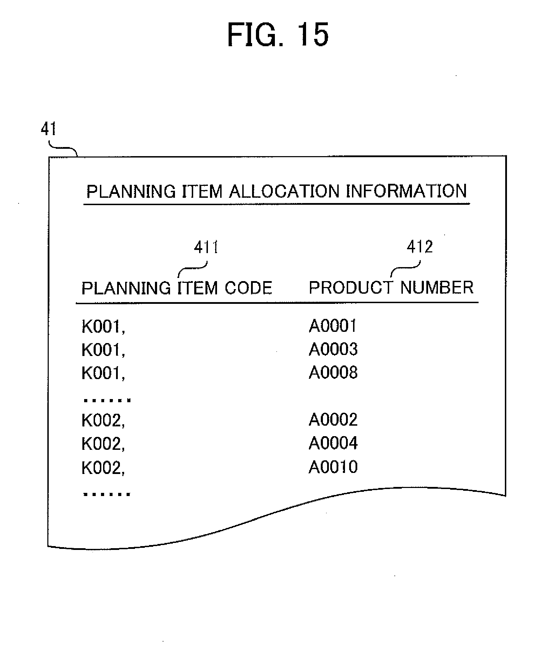

With reference to FIG. 15, the planning item allocation information 41 will be described. Referring to FIG. 15, the planning item allocation information 41 includes a planning item code field 411 where planning item codes which are identification numbers for planning item information are registered and a product number field 412 where product numbers which are identification numbers for final products are registered.

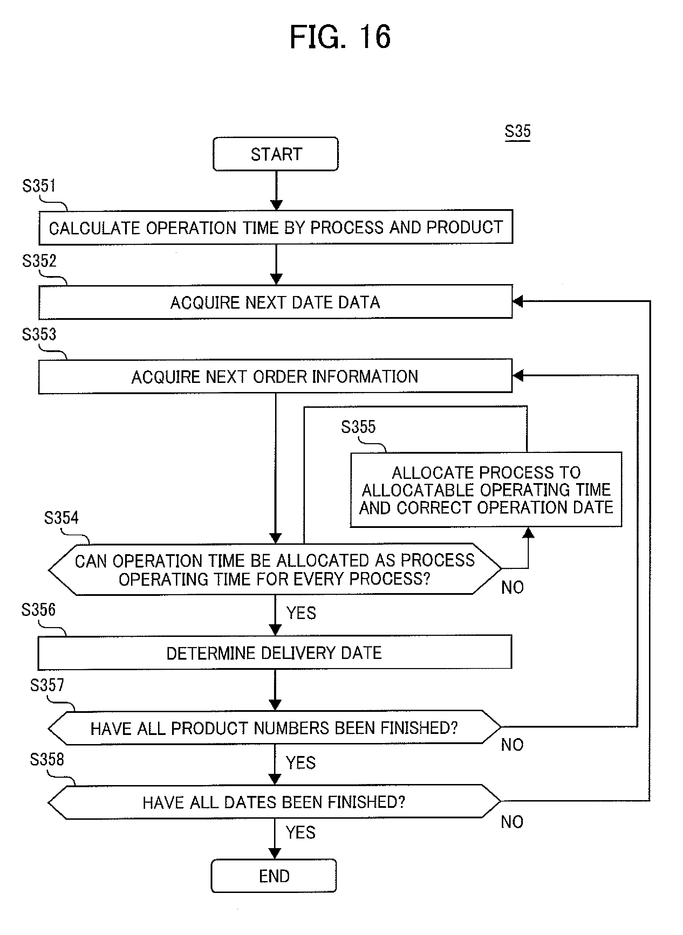

Next, the processing for evaluating the manufacturing capability of the production line (FIG. 3: S35) will be described in detail with reference to FIG. 16. Referring to FIG. 16, the production planning system 100 first calculates operation time by process and product number for every date (S351). In doing this, product numbers included in the planning item allocation information 41 and operation times included in the planning item information 11 are used. The production planning system 100 acquires target date data (S352) and order data (S353). The production planning system 100 determines whether operation time can be allocated as process operating time for every process (S354). When operation time can be allocated as process operating time for every process (S354: YES), the production planning system 100 determines a delivery date (S356).

When operation time allocation is not possible (S354: NO), the production planning system 100 allocates processes to allocatable operation time, corrects the operation date (S355), and returns the processing to step 354. The production planning system 100 repeats the above processing for every product number (S357) and for every date (S358), then ends the processing.

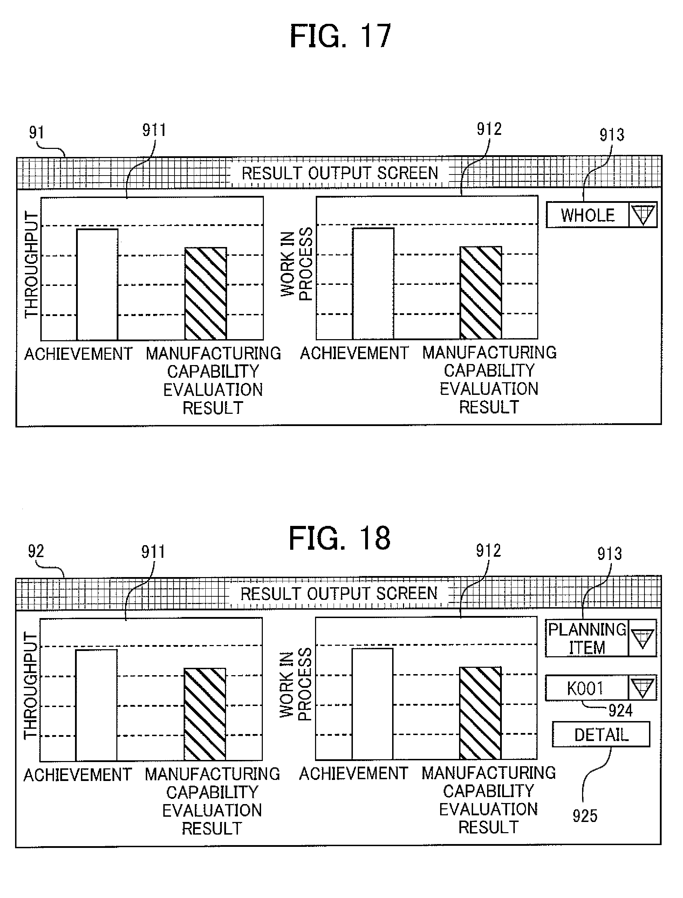

With reference to FIG. 17, a screen display showing results of evaluating the manufacturing capability of a production line will be described. Referring to FIG. 17, a result output screen 91 shows a production line throughput 911, a production-line work in process 912, and a pull-down menu 913. In each of the throughput 911 and the work in process 912, an achievement and a manufacturing capability evaluation result are displayed for comparison. This allows the user to check, in terms of the overall throughput and work in process, the difference between the achievement and an evaluation result. The difference represents the accuracy of manufacturing capability evaluation. Namely, when a new order is received, the manufacturing capability of the production line can be estimated with accuracy of the same level as achieved concerning the relationship between past production achievement and a result of manufacturing capability evaluation.

Based on the result output screen 91, changing the selection in the pull-down menu 913 using the input device 105 makes it possible to display comparison between production line achievement and a result of evaluating the manufacturing capability of the production line for each planning item as shown in FIG. 18. Referring to FIG. 18, a result output screen 92 shows a production-line throughput 911, a production-line work in process 912, pull-down menus 913 and 924, and a DETAIL button 925. In each of the throughput 911 and the work in process 912, an achievement and a manufacturing capability evaluation result are displayed for comparison. With the PLANNING ITEM and planning item code K001 selected in the pull-down menus 913 and 924, the throughput and the work in process shown are for planning item code K001. This allows the user to check, by comparing the achievement with the result of evaluating the manufacturing capability of the production line, the accuracy of evaluation of the manufacturing capability of the production line.

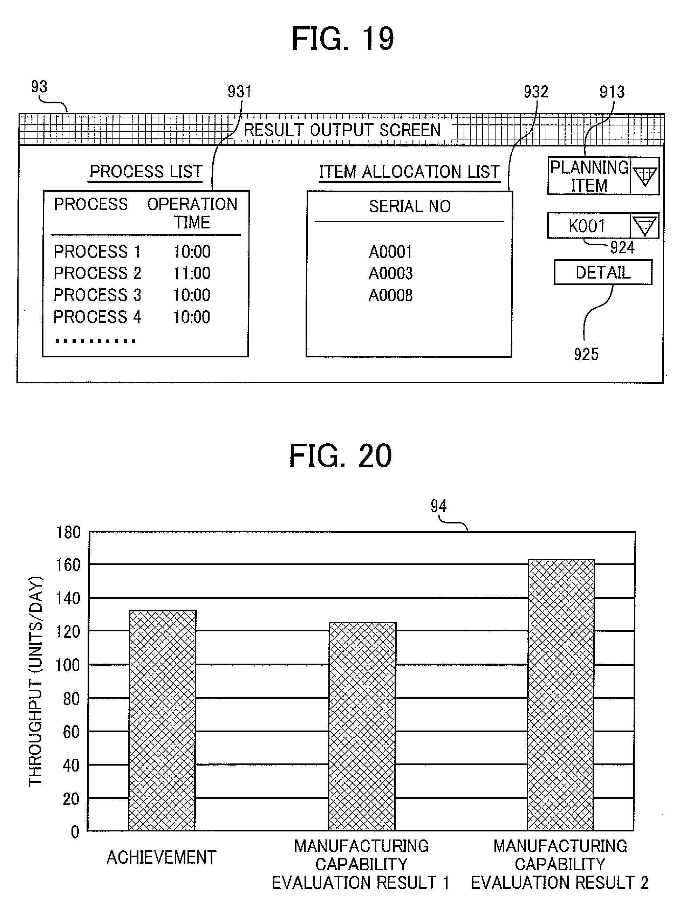

With reference to FIG. 19, a detailed result output screen will be described. Referring to FIG. 19, a result output screen 93 shows a process list 931, an item allocation list 932, the pull-down menus 913 and 924, and the DETAIL button 925. In the result output screen 92 shown in FIG. 18, process routes, operation times and allocated product numbers for the planning item can be checked by pressing the DETAIL button 925.

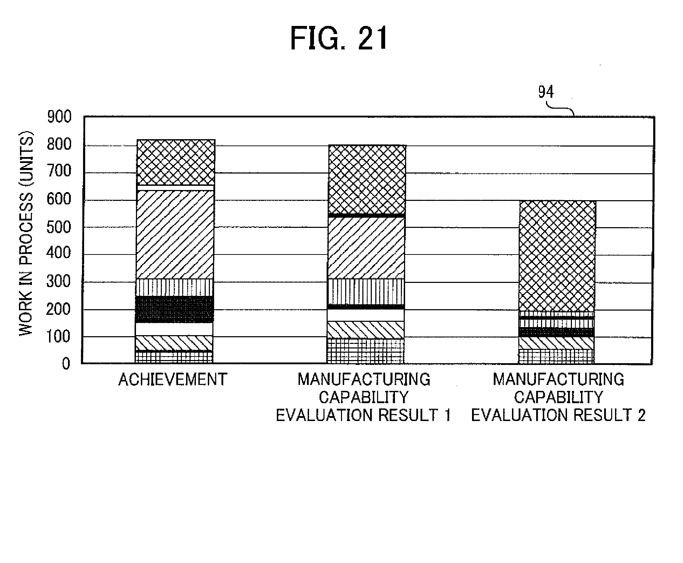

Finally, results of evaluating the manufacturing capability of a production line will be described with reference to FIGS. 20 and 21. In FIG. 20, the vertical axis of graph 94 represents throughput (units/day), both achievement and evaluation result. In FIG. 21, the vertical axis of graph 95 represents work in process (units), both achievement and evaluation result. Both the throughput and work in process are of a process. In FIGS. 20 and 21, "ACHIEVEMENT" represents achievement in a past half year, "MANUFACTURING CAPABILITY EVALUATION RESULT 1" represents a result of reproducing a past half year using the present technique, and "MANUFACTURING CAPABILITY EVALUATION RESULT 2" represents a result of estimating future manufacturing capability. The error between the "ACHIEVEMENT" and the "MANUFACTURING CAPABILITY EVALUATION RESULT 1" is within 3% both for the throughput and for the work in process. Namely, it is found that the "MANUFACTURING CAPABILITY EVALUATION RESULT 2" can also be estimated with an error not exceeding 3%.

According to the above embodiment, the manufacturing capability of a production line can be accurately evaluated for individually ordered products, so that a production plan to comply with a date of delivery to a customer can be accurately created in a short period of time.

DESCRIPTION OF SYMBOLS

| 11 | Planning item information |
| 21 | Order information |
| 31 | Operation process information |
| 41 | Planning item allocation information |
| 51 | Operation achievement information |
| 61 | Process route information |
| 71 | Process pattern classification table |
| 81 | Process pattern frequency graph |
| 91 | Result output screen |
| 92 | Result output screen |
| 93 | Result output screen |
| 94 | Graph |
| 95 | Graph |
| 100 | Production planning system |
| 101 | CPU |
| 102 | Memory |
| 103 | External storage device |
| 104 | Communication device |
| 105 | Input device |
| 106 | Output device |
| 107 | Reader |
| 108 | Network |
| 109 | Production line management system |
| 110 | Production planning system |
| 111 | Order processing system |

**Claims**

1. A production planning system comprising:

   an extraction/calculation section for, based on operation achievement information, extracting a process route of a production line and calculating an operation time for the process route;
   an addition/calculation section for, based on a difference between achieved manufacturing capability of the production line and evaluated manufacturing capability of the production line, adding the process route to a process route list and calculating a corrected operation time;
   a selection section for selecting a planning item from the process route list;
   an allocation section for evaluating similarity between the process route of the planning item and a process route for a received order and allocating the planning item to the received order; and
   a production planning section for evaluating the manufacturing capability of the production line based on the planning item and creating a production plan.

2. The production planning system according to claim 1, wherein the extraction/calculation section collects, for each process, an operation start time and an operation end time and calculates an operation time for the process route.

**3.** The production planning system according to claim 1, wherein the addition/calculation section evaluates, in terms of each of throughput and work in process, manufacturing capability of the production line until an evaluation result within a predetermined threshold value is obtained and calculates the corrected operation time.

**4.** The production planning system according to claim 1, wherein the allocation section determines similarity P between the process route of the planning item and the process route for the received order using an equation:

$$P_i = \left| \frac{n - m_i}{n} \right|$$

$$--- \quad (1)$$

where i represents the planning item code, n represents the number of processes for the received order, and mi represents the number of matches between the processes of the planning item and the processes for the received order.

**5.** A production planning method comprising the steps of:

based on operation achievement information, extracting a process route of a production line and calculating an operation time for the process route;
based on a difference between achieved manufacturing capability of the production line and evaluated manufacturing capability of the production line, adding the process route to a process route list and calculating a corrected operation time;
selecting a planning item from the process route list;
evaluating similarity between the process route of the planning item and a process route for a received order and allocating the planning item to the received order; and
evaluating the manufacturing capability of the production line based on the planning item and creating a production plan.

# FIG. 1

<u>100</u>

101 | 102 | 103

| CPU | MEMORY | EXTERNAL STORAGE DEVICE |

104 | 105 | 106 | 107

| COMMUNICATION DEVICE | INPUT DEVICE | OUTPUT DEVICE | READER |

108

| PRODUCTION LINE MANAGEMENT SYSTEM | PRODUCTION PLANNING SYSTEM | ORDER PROCESSING SYSTEM |

109 | 110 | 111

# FIG. 2

103

STORAGE SECTION

OPERATION
ACHIEVEMENT
INFORMATION

51

PROCESS ROUTE
INFORMATION

61

PLANNING ITEM
INFORMATION

11

ORDER
INFORMATION

21

OPERATION
PROCESS
INFORMATION

31

PLANNING ITEM
ALLOCATION
INFORMATION

41

# FIG. 3

START

S31

CALCULATION OF OPERATION TIME AND
EXTRACTION OF ALL PROCESS ROUTES FROM
OPERATION ACHIEVEMENT INFORMATION

S32

ADDITION OF PROCESS ROUTE AND
CORRECTION OF OPERATION TIME

S33

DETERMINATION OF PLANNING ITEMS

S34

EVALUATE SIMILARITY BETWEEN PROCESS
ROUTE OF PLANNING ITEMS AND PROCESS
ROUTE OF ORDER AND ALLOCATE PLANNING
ITEMS TO ORDER

S35

EVALUATION OF MANUFACTURING
CAPABILITY OF PRODUCTION LINE

END

# FIG. 4

S31

```
                          ┌─────────────┐
                          │    START    │
                          └──────┬──────┘
                                 │
S311 ┌───────────────────────────▼───────────────────────────┐
     │      EXTRACT ALL PROCESS ACHIEVEMENT FROM              │
     │        OPERATION ACHIEVEMENT INFORMATION               │
     └───────────────────────────┬───────────────────────────┘
                                 │
S312 ┌───────────────────────────▼───────────────────────────┐
     │       RE-ORDER PRODUCTION NUMBERS BY                   │
     │    DELIVERY DATE AND PROCESS ACHIEVEMENT               │
     │          BY OPERATION START TIME                       │
     └───────────────────────────┬───────────────────────────┘
                                 │
S313 ┌───────────────────────────▼───────────────────────────┐
     │        ACQUIRE ONE LINE OF RE-ORDERED                  │◄──────┐
     │        OPERATION ACHIEVEMENT INFORMATION               │       │
     └───────────────────────────┬───────────────────────────┘       │
                                 │                                    │
S314 ◄──────────────────────────▼──────────────────────────►  YES    │
     DO PROCESSES OF PAST PROCESS PATTERN                              │
     AND PROCESSES INCLUDED IN ACQUIRED                                │
     OPERATION INFORMATION MATCH COMPLETELY?                           │
                    │ NO                         │                     │
S315 ┌──────────────▼─────────────┐  S316 ┌──────▼───────────────────┐│
     │   REGISTER AS NEW PROCESS   │       │ INCREMENT BY ONE NUMBER OF││
     │       ROUTE PATTERN         │       │ TIMES PROCESS ROUTE PATTERN││
     └──────────────┬─────────────┘       │ HAS BEEN PASSED THROUGH   ││
                    │                      └──────┬───────────────────┘│
S317 ◄──────────────▼──────────────────────────────────►  NO          │
     HAS ALL DATA INCLUDED IN OPERATION                    ───────────┘
     ACHIEVEMENT INFORMATION BEEN FINISHED?
                    │
S318 ┌──────────────▼─────────────────────────────┐
     │  CALCULATE OPERATION TIME AVERAGE AND       │
     │   VARIANCE FOR EACH PROCESS ROUTE           │
     └──────────────┬─────────────────────────────┘
                    │
S319 ┌──────────────▼─────────────────────────────┐
     │  REGISTER CALCULATED DATA IN STORAGE        │
     │  SECTION AS PROCESS ROUTE INFORMATION       │
     └──────────────┬─────────────────────────────┘
                    │
             ┌──────▼──────┐
             │     END     │
             └─────────────┘
```

14

# FIG. 5

51

| OPERATION ACHIEVEMENT INFORMATION | | | | |
|---|---|---|---|---|
| 511 | 512 | 513 | 514 | 515 |
| PRODUCT NUMBER | PRODUCT | PROCESS | START TIME | END TIME |
| A0001, | PRODUCT A | PROCESS 1 | 7/1 10:00 | 7/1 15:00 |
| A0001, | PRODUCT A | PROCESS 2 | 7/2 11:00 | 7/2 12:00 |
| A0001, | PRODUCT A | PROCESS 3 | 7/4 10:00 | 7/4 13:00 |
| A0001, | PRODUCT A | PROCESS 4 | 7/5 10:00 | 7/5 16:00 |
| . . . . . . | | | | |
| A0002, | PRODUCT B | PROCESS 1 | 7/1 10:00 | 7/1 15:00 |
| A0002, | PRODUCT B | PROCESS 2 | 7/2 12:00 | 7/2 16:00 |
| A0002, | PRODUCT B | PROCESS 3 | 7/4 15:00 | 7/4 18:00 |
| A0002, | PRODUCT B | PROCESS 8 | 7/5 11:00 | 7/5 15:00 |
| . . . . . . | | | | |

# FIG. 6

PROCESS ROUTE INFORMATION

| ROUTE PATTERN | PROCESS | TOTAL NUMBER | AVERAGE | VARIANCE |
|---|---|---|---|---|
| 1 | PROCESS 1 | 50 | 02:05 | 50 |
| 1 | PROCESS 2 | 50 | 04:10 | 1:10 |
| 1 | PROCESS 3 | 50 | 02:42 | 39 |
| 1 | PROCESS 4 | 50 | 03:02 | 35 |
| 1 | PROCESS 5 | 50 | 06:41 | 56 |
| 2 | PROCESS 1 | 40 | 03:41 | 1:08 |
| 2 | PROCESS 2 | 40 | 05:55 | 1:33 |
| 2 | PROCESS 3 | 40 | 02:08 | 36 |
| 2 | PROCESS 4 | 40 | 05:35 | 2:35 |
| 3 | PROCESS 2 | 5 | 02:27 | 56 |
| 3 | PROCESS 3 | 5 | 03:05 | 1:40 |
| 3 | PROCESS 4 | 5 | 08:05 | 1:08 |

......

# FIG. 7

| PATTERN | 1 | 2 | 3 | · · · · | N |
|---|---|---|---|---|---|
| PROCESS ROUTE | PROCESS 1 PROCESS 2 PROCESS 3 PROCESS 4 | PROCESS 1 PROCESS 2 PROCESS 3 PROCESS 5 | PROCESS 1 PROCESS 2 PROCESS 4 | · · · · | PROCESS 1 PROCESS 4 PROCESS 5 |
| TOTAL | 50 | 25 | 15 | | 1 |

71

TABLE  72

# FIG. 8

GRAPH  72

81

TOTAL 50

PATTERN    1    2    3   · · · ·   N

# FIG. 9

S32

START

S321

ADD PROCESS ROUTE WITH LARGEST TOTAL NUMBER TO PROCESS ROUTE LIST TO BE TARGET OF EVALUATION OF MANUFACTURING CAPABILITY OF PRODUCTION LINE AND ACQUIRE OPERATION TIME OF EACH PROCESS REGISTERED IN PROCESS ROUTE INFORMATION

S322

EVALUATE MANUFACTURING CAPABILITY OF PRODUCTION LINE BASED ON PROCESS ROUTE LIST AND OPERATION TIME

S323

YES | ARE THROUGHPUT AND WORK IN PROCESS DETERMINED AS RESULT OF MANUFACTURING CAPABILITY WITHIN PREDETERMINED THRESHOLD VALUES?

S324 | NO

HAVE ALL PROCESS ROUTES BEEN ADDED TO PROCESS ROUTE LIST? | NO

S325 | YES

CHANGE OPERATION TIME FOR PROCESS SHOWING LARGE DIFFERENCE BETWEEN WORK IN PROCESS DETERMINED IN EVALUATION OF MANUFACTURING CAPABILITY OF PRODUCTION LINE AND WORK-IN-PROCESS ACHIEVEMENT, CREATE PROCESS ROUTE LIST, AND CALCULATE OPERATION TIME FOR EACH PROCESS

S326

YES | ARE THROUGHPUT AND WORK IN PROCESS BASED ON RESULT OF EVALUATING MANUFACTURING CAPABILITY OF PRODUCTION LIEN WITHIN PREDETERMINED THRESHOLD VALUES?

S327 | NO

HAS OPERATION TIME DIVISION BEEN FINISHED FOR ALL PROCESSES? | NO

YES

END

# FIG. 10

S325

START

S3251

SELECT PROCESS WITH LARGEST RATIO OF
DIFFERENCE BETWEEN WORK-IN-PROCESS
ACHIEVEMENT AND WORK IN PROCESS
DETERMINED IN EVALUATION OF
MANUFACTURING CAPABILITY OF
PRODUCTION LINE

S3255

SELECT PROCESS WITH SECOND LARGEST
RATIO OF DIFFERENCE BETWEEN
WORK-IN-PROCESS ACHIEVEMENT AND
WORK IN PROCESS DETERMINED IN EVALUATION
OF MANUFACTURING CAPABILITY OF
PRODUCTION LINE

S3252

IS DIFFERENCE BETWEEN ACHIEVEMENT OF
SELECTED PROCESS AND THROUGHPUT DETERMINED
IN EVALUATION OF MANUFACTURING CAPABILITY
LARGER THAN THRESHOLD VALUE?

NO

S3253

YES

CORRECT OPERATION TIME BASED ON
THROUGHPUT ACHIEVEMENT AND
THROUGHPUT DETERMINED IN EVALUATION
OF MANUFACTURING CAPABILITY

S3254

GENERATE AND REGISTER PLANNING ITEM

END

19

# FIG. 11

11

**PLANNING ITEM INFORMATION**

| PLANNING ITEM CODE | PROCESS | OPERATION TIME |
| --- | --- | --- |
| 115 | 116 | 117 |
| K001, | PROCESS 1, | 10:00 |
| K001, | PROCESS 2, | 11:00 |
| K001, | PROCESS 3, | 10:00 |
| K001, | PROCESS 4, | 10:00 |
| ..... | | |
| K002, | PROCESS 1, | 10:00 |
| K002, | PROCESS 2, | 12:00 |
| K002, | PROCESS 3, | 15:00 |
| ..... | | |

# FIG. 12

21

ORDER INFORMATION

| 211 | 212 | 213 | 214 |
|---|---|---|---|
| ORDER NUMBER | PRODUCT NUMBER | DELIVERY DATE | DELIVERY DESTINATION |
| S000001, | A0001 | 10/1 | COMPANY A |
| S000002, | A0002 | 10/1 | COMPANY B |
| S000003, | A0004 | 10/2 | COMPANY C |
| . . . . . | | | |

# FIG. 13

31

OPERATION PROCESS INFORMATION

| PRODUCT NUMBER (311) | PRODUCT (312) | PROCESS (313) |
| --- | --- | --- |
| A0001, | PRODUCT A | PROCESS 1 |
| A0001, | PRODUCT A | PROCESS 2 |
| A0001, | PRODUCT A | PROCESS 3 |
| A0001, | PRODUCT A | PROCESS 4 |
| . . . . . | | |
| A0002, | PRODUCT B | PROCESS 1 |
| A0002, | PRODUCT B | PROCESS 2 |
| A0002, | PRODUCT B | PROCESS 3 |
| A0002, | PRODUCT B | PROCESS 8 |
| . . . . . | | |

# FIG. 14

S34

START

S341

READ ORDER INFORMATION, OPERATION PROCESS INFORMATION AND PLANNING ITEM INFORMATION

S342

ACQUIRE TARGET DATA FROM ORDER INFORMATION

S343

COMPARE PROCESSES INDICATED BY OPERATION PROCESS INFORMATION INCLUDED IN TARGET DATA AND PROCESSES INDICATED BY PLANNING ITEM INFORMATION AND ALLOCATE PRODUCT NUMBER TO PLANNING ITEM CODE HAVING SIMILARITY

S344

HAS ALL DATA INCLUDED IN ORDER INFORMATION BEEN FINISHED?    NO

YES

S345

REGISTER AS PLANNING ITEM ALLOCATION INFORMATION IN STORAGE SECTION

END

# FIG. 15

41

### PLANNING ITEM ALLOCATION INFORMATION

| PLANNING ITEM CODE 411 | PRODUCT NUMBER 412 |
|---|---|
| K001, | A0001 |
| K001, | A0003 |
| K001, | A0008 |
| ...... | |
| K002, | A0002 |
| K002, | A0004 |
| K002, | A0010 |
| ...... | |

# FIG. 16

S35

START

S351
CALCULATE OPERATION TIME BY PROCESS AND PRODUCT

S352
ACQUIRE NEXT DATE DATA

S353
ACQUIRE NEXT ORDER INFORMATION

S355
ALLOCATE PROCESS TO ALLOCATABLE OPERATING TIME AND CORRECT OPERATION DATE

S354
CAN OPERATION TIME BE ALLOCATED AS PROCESS OPERATING TIME FOR EVERY PROCESS? NO

YES

S356
DETERMINE DELIVERY DATE

S357
HAVE ALL PRODUCT NUMBERS BEEN FINISHED? NO

YES

S358
HAVE ALL DATES BEEN FINISHED? NO

YES

END

# FIG. 17

# FIG. 18

# FIG. 19

93    931    932    913

RESULT OUTPUT SCREEN

PROCESS LIST

| PROCESS | OPERATION TIME |
|---------|----------------|
| PROCESS 1 | 10:00 |
| PROCESS 2 | 11:00 |
| PROCESS 3 | 10:00 |
| PROCESS 4 | 10:00 |
| . . . . . . . . . . | |

ITEM ALLOCATION LIST

| SERIAL NO |
|-----------|
| A0001 |
| A0003 |
| A0008 |

PLANNING ITEM ▽

K001 ▽
924

DETAIL

925

# FIG. 20

94

THROUGHPUT (UNITS/DAY)

180
160
140
120
100
80
60
40
20
0

ACHIEVEMENT    MANUFACTURING CAPABILITY EVALUATION RESULT 1    MANUFACTURING CAPABILITY EVALUATION RESULT 2

# FIG. 21

**INTERNATIONAL SEARCH REPORT**

International application No.

PCT/JP2008/003625

A. CLASSIFICATION OF SUBJECT MATTER
*G05B19/418(2006.01)i, G06Q50/00(2006.01)i*

According to International Patent Classification (IPC) or to both national classification and IPC

B. FIELDS SEARCHED

Minimum documentation searched (classification system followed by classification symbols)
G05B19/418, G06Q50/00

Documentation searched other than minimum documentation to the extent that such documents are included in the fields searched
Jitsuyo Shinan Koho 1922-1996 Jitsuyo Shinan Toroku Koho 1996-2009
Kokai Jitsuyo Shinan Koho 1971-2009 Toroku Jitsuyo Shinan Koho 1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-155511 A (Sharp Corp.), 15 June, 2006 (15.06.06), Full text; all drawings (Family: none) | 1-5 |
| A | JP 2003-288476 A (Hitachi, Ltd.), 10 October, 2003 (10.10.03), Full text; all drawings (Family: none) | 1-5 |
| A | JP 9-277142 A (NEC Corp.), 28 October, 1997 (28.10.97), Full text; all drawings (Family: none) | 1-5 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
09 January, 2009 (09.01.09)

Date of mailing of the international search report
20 January, 2009 (20.01.09)

Name and mailing address of the ISA/
Japanese Patent Office

Authorized officer

Facsimile No.

Telephone No.

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003288476 A
- JP 2007201309 A
- JP 2007188133 A